Europäisches Patentamt

European Patent Office

Office européen des brevets

(19)

(11) Numéro de publication : **0 063 080**
**B1**

(12) **FASCICULE DE BREVET EUROPÉEN**

(45) Date de publication du fascicule du brevet :
20.08.86

(51) Int. Cl.⁴ : **G 06 F 15/40**, G 06 K 17/00

(21) Numéro de dépôt : **82400617.5**

(22) Date de dépôt : **02.04.82**

(54) **Utilisation d'un réseau télématique de consultation d'information à distance.**

(30) Priorité : **10.04.81 FR 8107250**

(43) Date de publication de la demande :
**20.10.82 Bulletin 82/42**

(45) Mention de la délivrance du brevet :
**20.08.86 Bulletin 86/34**

(84) Etats contractants désignés :
**DE GB IT**

(56) Documents cités :
**EP-A- 0 007 660**
**FR-A- 2 397 022**
**FR-A- 2 440 582**
**FR-A- 2 483 635**
**US-A- 3 936 596**
**US-A- 4 225 217**

(73) Titulaire : **Piaton, Alain Nicolas**
**10, Boulevard Jean Mermoz**
**F-92200 Neuilly-sur-Seine (FR)**

**Société ANFOR S.A., Société Anonyme**
**3, Avenue du Président Wilson**
**F-75116 Paris (FR)**

(72) Inventeur : **Piaton, Alain, Nicolas**
**10, Bld Jean-Mermoz**
**F-92200 Neuilly S/Seine (FR)**

(74) Mandataire : **Rodhain, Claude**
**Cabinet Rodhain-Genestie 30, rue La Boétie**
**F-75008 Paris (FR)**

## Description

La présente invention concerne les utilisations des réseaux télématiques de consultation d'informations à distance.

On connaît déjà des réseaux télématiques (terminal d'annuaire, Télétel, etc...), qui utilisent un ordinateur central et des terminaux reliés par le réseau téléphonique et qui servent soit à donner des informations aux utilisateurs en mode interactif, soit à traiter des informations à distance.

Ces réseaux présentent toutefois divers inconvénients, à savoir qu'il est impossible d'envoyer rapidement des images ou des séquences sonores de bonne qualité sur le réseau téléphonique à 1 200 bauds, que l'on est obligé de stocker dans l'ordinateur central beaucoup d'informations, et enfin que le coût de la transmission est élevé.

On connaît également le dispositif décrit dans le brevet américain 4 225 217 du 30 septembre 1980, concernant l'utilisation de microfiches dans un appareil de visualisation automatique, chaque microfiche comportant d'une part une image de référence permettant son positionnement et d'autre part une pluralité d'images à visualiser. Le dispositif décrit à titre d'illustration est une application de ce type de microfiches dans un système informatique bancaire. Plus précisément, l'installation décrite comporte un ordinateur central et des terminaux avec clavier et console de visualisation, l'ordinateur central pilotant parallèlement un lecteur de microfiches à la demande des terminaux. Selon une version élaborée de l'invention, chaque terminal peut visualiser sur sa propre console une image particulière des microfiches, différente de celle visualisée sur une console voisine ; le dispositif achemine l'image en question sous forme de signal vidéo généré par un dispositif à balayage de lecture des microfiches.

Or ce dispositif présente à la fois une complexité de fonctionnement qui en rend le coût élevé, et une inadéquation pour les réseaux d'informations à grande échelle. En effet, le principe consistant à transformer systématiquement chaque image de microfiche en signal vidéo pour en permettre l'acheminement jusqu'aux différents terminaux exige la présence d'un système onéreux de balayage des microfiches. Ce système doit de plus être conçu de façon à pouvoir lire simultanément plusieurs microfiches pour répondre à la demande simultanée de différents terminaux avec un bon temps de réponse. Dans le cas d'une utilisation dans un réseau important comportant de très nombreux terminaux très éloignés de l'ordinateur central, cet inconvénient se double alors du coût de transport des signaux vidéo, et de tous les désavantages liés aux systèmes centralisés.

On connaît également le dispositif décrit dans le brevet français 2 440 582 Parisot du 3 novembre 1968, concernant un lecteur de microfiches à recherche automatique utilisant un microcalculateur. L'objectif de ce dispositif connu est d'éviter les erreurs de cadrage des microfiches dans le lecteur et de permettre de nombreuses fonctions de sélection des microfiches à visualiser à partir d'un clavier accessible à l'utilisateur. Ceci est obtenu à l'aide d'un microcalculateur gérant la visualisation des microfiches à partir des instructions fournies par l'utilisateur et d'informations contenues en mémoire. Ce second dispositif connu est donc intéressant dans la mesure où il permet une consultation locale de microfiches, mais ne résout en aucune manière le problème de l'acheminement des informations de la banque de données jusqu'à des terminaux éloignés, ni même et surtout le problème posé par la mise à jour des informations contenues dans les microfiches.

En conséquence, l'objectif de l'invention est d'utiliser un réseau télématique pour permettre la consultation, par une pluralité de stations intelligentes, de leur banque de donnée locale constituée de microfiches visualisables, tout en interrogeant simultanément un ordinateur central de façon à obtenir et afficher (le cas échéant) des informations de mise à jour desdites microfiches.

Plus précisément, l'invention consiste en l'utilisation d'un réseau télématique, du type comportant, d'une part, un ordinateur central contenant des données d'informations et éventuellement tout ou partie du programme utilisateur gérés par ledit ordinateur, et d'autre part des postes de consultation qui peuvent être reliés à l'ordinateur central grâce à une ligne de transmission à distance, chaque poste de consultation comprenant au moins des microfiches, supports d'une banque de données d'informations figées, un appareil de sélection et de projection des vues desdites microfiches, un écran de visualisation, un clavier, une unité de commande, une mémoire vive, utilisation selon laquelle dans un premier temps l'ordinateur central transfère dans la mémoire vive du poste de consultation, d'une part des données d'informations pour la mise à jour de ladite banque de données sur microfiches et d'autre part éventuellement tout ou partie du programme utilisateur, et dans un second temps le poste de consultation déroule le programme utilisateur, la liaison entre l'ordinateur central et le poste de consultation pouvant être interrompue, ou maintenue pour l'échange de données d'information et/ou d'éléments de programme utilisateur.

Par « programme utilisateur », on entend l'ensemble des instructions qui sont susceptibles de varier quand on passe d'un utilisateur à l'autre.

Selon un autre mode d'utilisation du réseau télématique selon l'invention, la partie du programme utilisateur non chargée à partir de l'ordinateur est au moins en partie sur une mémoire non volatile, fixe ou amovible, du poste de consultation.

Grâce à cet agencement, d'une part, l'utilisateur dispose de bonnes images étant donné qu'elles sont stockées localement sur les microfiches et, d'autre part, lorsqu'une information sur une vue de la microfiche est devenue inexacte ou dépassée, le poste de consultation peut afficher sur l'écran de visualisation les éléments correctifs, ce qui résoud le problème de la mise à jour des images qui sont normalement figées sur les microfiches.

De manière particulièrement avantageuse, il peut être prévu que chaque poste de consultation comprenne, en outre, des moyens de diffusion de séquences sonores. C'est ainsi que, si l'on adjoint un magnétophone à l'appareil, on a la possibilité de diffuser des séquences sonores en correspondance avec des informations présentées visuellement, ce qu'un terminal classique ne peut pas faire.

De préférence, chaque poste de consultation peut comporter, en outre, une mémoire non volatile enfichable contenant une partie du programme utilisateur. Ainsi, si on enfiche une cartouche enfichable comportant un logiciel particulier (par exemple calculs, logiciel de recherche par balayage, etc...) on peut augmenter les possibilités de traitement du poste de consultation, sans être obligé de faire transiter ces informations par le réseau téléphonique.

On peut également, avantageusement, prévoir que au moins une partie des vues des microfiches présentent des informations nécessaires au déroulement logique du programme. Alors que la plupart des appareils qui présentent des images sur microfiches ne permettent que de passer de façon biunivoque d'un indicatif tapé sur un clavier à une vue bien déterminée, le poste de consultation du présent appareil permet en plus d'avoir une recherche par arborescence (l'information précitée appartenant à une vue indiquant à l'utilisateur quelle action il doit avoir, par exemple sur le clavier, pour commander le passage à l'une voulue d'une série de nouvelles vues au choix), ce qui est le mode de recherche le plus naturel.

Le poste de consultation peut, par exemple, être constitué par un appareil du type de celui qui est décrit dans le brevet français n° 80 12 197, du 2 juin 1980 (n° de publication 24 83 635), et qui comporte, entre autres, un système de projection d'images à partir de microfiches, un clavier de commande et une unité de commande comportant au moins un microprocesseur et qui, en fonction des ordres de l'utilisateur tapés sur le clavier, et d'un programme stocké sur une ou plusieurs mémoires, commande la projection de telle ou telle image. Ainsi qu'il est également décrit dans ce brevet, l'appareil peut comporter, en outre, un moyen de diffusion du son (magnétophone ou synthétiseur vocal), des moyens d'affichage (afficheur, écran de visualisation, ...) ou d'impression.

Dans le cas où la ligne de transmission à distance est d'un type nécessitant une modification des signaux, l'appareil peut, en outre, comporter une interface, par exemple un modem.

Grâce à un tel agencement, l'invention peut être utilisée de différentes manières.

On peut, dans un premier type d'utilisation, relier le poste de consultation en permanence à l'ordinateur central (fonctionnement « en ligne »).

On utilise les possibilités de l'unité de commande pour dérouler un programme qui fait intervenir une partie ou la totalité des éléments à laquelle l'unité de commande est raccordée : affichage de textes sur l'écran de visualisation, projection d'une image de la microfiche, diffusion de séquence sonores, acquisition de caractères sur les différents claviers, acquisition ou envoi de caractères vers l'ordinateur situé à distance, appel d'une page Videotex contenue dans l'ordinateur et affichage de cette page sur l'écran de visualisation, calculs, traitements en mémoire, comparaisons, lecture ou écriture d'informations ou de sons sur la minicassette, lecture ou écriture d'informations sur une cartouche mémoire enfichable (RAM, REPROM, NVRAM, RAM batterie, EAROM, etc...).

Quant au programme d'utilisateur, il peut provenir d'un ou plusieurs supports locaux (cartouche enfichable non volatile, minicassette, etc...) et/ou être chargé dans une mémoire vive à partir de l'ordinateur situé à distance, soit en une fois, soit par phases successives. Ceci permet, par exemple, d'avoir un mode d'emploi guidé par le son et/ou l'image pour effectuer des opérations de saisie d'informations au clavier en vue de leur envoi vers l'ordinateur distant (prises de commandes), ou bien d'avoir une machine à calculer guidée par l'image ; ceci permet également de présenter les dessins d'un catalogue de pièces détachées et, en parallèle, sur l'écran, des informations relatives à ces pièces, mais dont le contenu varie souvent (par exemple la quantité en stock), ou encore, pendant le déroulement du programme, de remplacer une vue ancienne de la microfiche par une page Vidéotex récente.

Dans un second type d'utilisation, on transfère, dans un premier temps, des informations de l'ordinateur distant vers une mémoire du poste de consultation, via l'interface (modem). Ces informations peuvent être stockées en mémoire vive, enfichable ou non, ou bien recopiées sur un autre support du poste de consultation, tel que minicassette, disquette, cartouche enfichable non volatile, en vue de leur utilisation ultérieure. Une fois ce transfert terminé, on peut libérer la liaison entre l'ordinateur distant et le poste de consultation, de telle sorte que ce dernier fonctionne en mode autonome.

Le programme du poste de consultation peut être organisé de plusieurs manières différentes :

On peut avoir en permanence dans l'appareil (par exemple sur des ROM ou REPROM) des routines dites de bas niveau, qui permettent de piloter les différents éléments de l'ensemble (commande des moteurs de déplacement des microfiches, affichage sur l'écran, chargement de routines à partir d'un organe périphérique tel qu'ordinateur distant, mini-cassette, disquette, etc...). Quant au programme -utilisateur, il se compose d'instructions ou informations ou routines qui, associées à celles qui résident en permanence dans l'appareil, permettent de dérouler les séquences désirées.

Il est possible également d'avoir en permanence dans l'appareil un programme paramétré, et les instructions qui correspondent au programme utilisateur se présentent sous la forme de paramètres ; dans le brevet cité ci-dessus, on donne une description possible d'une table de paramètres correspondant à un mode de recherche « en arborescence ».

Selon les besoins, on fera appel simultanément ou successivement, aux différents modes de programmation (compilateur, interpréteur, programme paramétré, etc...).

On peut avoir un partage des supports mémoires (mémoire figée et permanente — mémoire amovible) qui corresponde au découpage entre routines générales et informations utilisateur, mais il peut être également intéressant de mettre dans les mémoires « amovibles », non seulement des éléments relatifs aux utilisateurs, mais également certaines routines générales qui permettent de modifier le fonctionnement du poste de consultation. Par exemple, on peut mettre dans une ou plusieurs cartouches enfichables non volatiles, (ou sur minicassette) ou bien charger à partir de l'ordinateur distant, des routines permettant les calculs, ou bien des routines qui permettent de balayer les vues de la microfiche selon certains critères (par exemple toutes les vues qui comportent tel élément), etc..., car ce sont des routines générales qui ne sont pas utilisées dans tous les programmes. Une mémoire amovible peut être en même temps le support de ces routines générales et des éléments relatifs aux utilisateurs ; on peut avoir également ces ensembles sur des mémoires amovibles séparées, de même nature, ou bien de nature différente (par exemple, l'un sur une cartouche enfichable, l'autre en partie sur la cartouche enfichable et en partie chargée à distance).

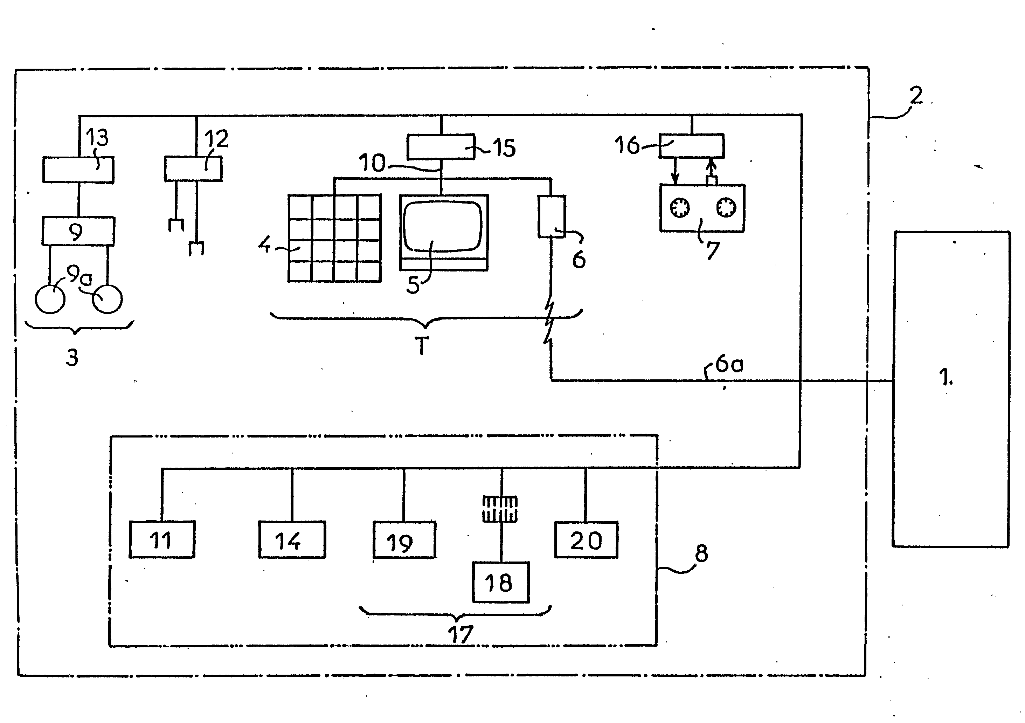

D'autres caractéristiques et avantages de l'invention ressortiront de la description qui va suivre, à titre d'exemple non limitatif et en regard du dessin annexé sur lequel :

la figure unique représente un schéma d'ensemble d'un réseau télématique.

Le réseau télématique représenté par la figure unique comprend d'une manière générale un ordinateur central 1 et plusieurs postes de consultation 2 dont un seul est représenté. Ce dernier comprend une table de lecture de microfiches 3, un clavier 4, un écran 5, un modem 6, une platine de magnétophone 7 et une unité de commande 8.

La table 3 se compose d'un condenseur, d'un objectif, d'un jeu de miroirs, d'un écran de projection, et d'un chariot 9 qui enserre, entre deux lames de verre, la microfiche à projeter, ce chariot étant monté sur des glissières, et se déplaçant en x, y, devant l'objectif grâce à deux moteurs pas à pas 9a. Le clavier 4 est un clavier alpha-numérique, ou numérique à 12 ou 16 touches. L'écran 5 est un écran de visualisation, par exemple à tube cathodique. Le modem 6 permet de moduler les informations pour les transmettre sur le réseau téléphonique 6a.

Ces trois derniers éléments peuvent être réunis dans un seul appareil T appelé couramment terminal, qui comporte une liaison série 10 vers l'unité de commande (et la sortie 6a du modem vers l'ordinateur central 1). Dans certaines conditions, on peut faire fonctionner ce terminal en mode « transparent », c'est-à-dire que les informations transitent dans le terminal, de l'unité de commande vers l'ordinateur central (ou inversement) en passant seulement à travers le modem, et en étant ignorées par le clavier et l'écran.

La platine 7 est une platine de magnétophone à cassette, télécommandable, dont les moteurs et l'engagement de la tête de lecture sont commandés par l'unité de commande, et qui transmet les indications du compte-tours, et les signaux détectés sur la bande magnétique.

L'unité de commande 8 comprend un microprocesseur 11, des portes en lecture 12 reliées à des capteurs qui détectent les positions en butée du chariot, des portes en sortie 13 qui commandent les phases des deux moteurs pas à pas 9a, de la mémoire vive 14 (1/4 K-octet, par exemple) pour les variables de fonctionnement du programme, des interfaces 15 et 16 de la mémoire non volatile 17 et de la mémoire vive 20. Les interfaces comprennent une interface série 15 vers l'écran de visualisation 5 (ou vers l'ensemble clavier-écran-modem, si ces trois éléments sont regroupés dans un même terminal, ainsi qu'il a été indiqué plus haut), et une interface série vers le modem 6, et donc vers l'ordinateur central 1, (dans le cas évoqué ci-dessus où le modem appartient au terminal, et si ce dernier peut fonctionner en mode « transparent », cette interface est alors inutile). Il est également prévu une interface 16 qui reçoit les informations transmises par le compte-tours du magnétophone 7, qui analyse les signaux lus sur la bande et qui commande les moteurs et l'engagement de la tête du magnétophone. La mémoire non volatile 17 est une mémoire ROM, PROM, REPROM, NVRAM, EAPROM, RAM batterie, mémoire à bulle, etc..., dont une partie peut être sur une cartouche de mémoire non volatile enfichable 18 et une autre partie sur un support non enfichable 19, et qui contient les instructions qui permettent de commander les différents moteurs, d'engager la tête, d'envoyer les messages sur les différentes interfaces, etc..., en fonction des informations reçues en provenance des capteurs du chariot, du compte-tours, de la bande magnétique, des différentes interfaces, et d'un programme utilisateur qui est stocké en totalité ou en partie sur le même ou sur un autre support. L'unité de commande comprend encore de la mémoire vive 20 (RAM, par exemple) dans laquelle tout ou partie du programme utilisateur est transféré en une ou plusieurs fois à partir de l'ordinateur central 1 au cours d'une phase de chargement (ou téléchargement).

Le programme utilisateur peut permettre un balayage des vues selon un critère, ou encore permettre d'enchaîner plusieurs vues (ou séquences sonores) les unes après les autres, en fonction des ordres de l'utilisateur tapés sur le clavier 4 suivant un « graphe » ou un arbre de décision (c'est ce que l'on appelle communément une recherche en arborescence).

L'invention trouve une application particulièrement avantageuse pour la consultation des horaires des transports en commun.

**Revendications**

1. Utilisation d'un réseau télématique, du type comportant, d'une part, un ordinateur central (1) contenant des données d'informations et éventuellement tout ou partie du programme utilisateur gérés par ledit ordinateur, et d'autre part des postes de consultation (2) qui peuvent être reliés à l'ordinateur central grâce à une ligne de transmission à distance (6a), chaque poste de consultation (2) comprenant au moins des microfiches, supports d'une banque de données d'informations figées, un appareil de sélection et de projection (9) des vues desdites microfiches, un écran de visualisation (5), un clavier (4), une unité de commande (8), une mémoire vive (20), utilisation selon laquelle, dans un premier temps l'ordinateur central transfère dans la mémoire vive (20) du poste de consultation, d'une part des données d'informations pour la mise à jour de ladite banque de données sur microfiches et d'autre part éventuellement tout ou partie du programme utilisateur, et dans un second temps le poste de consultation déroule le programme utilisateur, la liaison entre l'ordinateur central et le poste de consultation pouvant être interrompue, ou maintenue pour l'échange de données d'information et/ou d'éléments de programme utilisateur.

2. Utilisation d'un réseau selon la revendication 1, caractérisé en ce que la partie du programme utilisateur non chargée à partir de l'ordinateur central est au moins en partie sur une mémoire non volatile, fixe (19) ou amovible (18) du poste de consultation.

**Claims**

1. Use of a telematic network, of the type comprising on the one hand a central computer (1) containing data and possibly all or part of the user program controlled by the said computer, and, on the other hand, consultation stations (2), which may be connected to the central computer by means of a remote transmission line (6a), each consultation station (2) comprising at least microfiche, carriers of a bank of set data, a selection and projection device (9) for viewing the said microfiche, a viewing screen (5), a keyboard (4), a control unit (8), a read-write memory (20), according to which use the central computer firstly transfers into the read-write memory (20) of the consultation station on the one hand data for updating the said data bank on microfiche, and on the other hand possibly all or part of the user program, and secondly, the consultation station runs off the user program, it being possible to interrupt the connection between the central computer and the consultation station, or to maintain the said connection in order to exchange data and/or elements of the user program.

2. Use of a network according to claim 1, characterised in that the part of the user program which is not loaded from the central computer is at least partially on a non-volatile, fixed (19) or removable (18) memory of the consultation station.

**Patentansprüche**

1. Verwendung eines telematischen Netzes des Typs, der einerseits einen Zentralrechner (1) umfaßt, welcher Informationsdaten und gegebenenfalls ganz oder teilweise das von ihm gesteuerte Benutzerprogramm enthält, und andererseits Anfragestationen (2) umfaßt, die mit dem Zentralrechner (1) durch eine Fernübertragungsleitung (6a) verbindbar sind, wobei jede Anfragestation (2) wenigstens mehrere Mikrofiches als Träger für eine Datenbank, eine Vorrichtung (9) zur Auswahl und Projektion von Bildern der Mikrofiches, eine Bildschirmvorrichtung (5), eine Tastatur (4), eine Steuereinheit (8) und einen Lebendspeicher (20) aufweist, bei welcher Verwendung während einer ersten Zeitdauer der Zentralrechner (1) dem Lebendspeicher (20) der Anfangsstation (2) einerseits Informationsdaten zur Aktualisierung der Datenbank auf Mikrofiches, andererseits gegebenenfalls ganz oder teilweise das Benutzerprogramm überträgt, und während einer zweiten Zeitdauer die Anfragestation (2) das Benutzerprogramm abwickelt, wobei die Verbindung zwischen dem Zentralrechner (1) und der Anfragestation (2) unterbrochen oder zum Austausch von Informationsdaten und/oder Elementen des Benutzerprogramms aufrechterhalten werden kann.

2. Verwendung eines Netzes nach Anspruch 1, dadurch gekennzeichnet, daß der nicht vom Zentralrechner (1) übertragene Teil des Benutzerprogramms sich wenigstens teilweise in einem nichtflüchtigen, festen (19) oder programmierbaren (18) Speicher der Anfragestation (2) befindet.

0 063 080